# EUROPÄISCHE PATENTANMELDUNG

(11) **EP 2 088 332 A1**
(43) Veröffentlichungstag der Anmeldung: **12.08.2009**
(21) Anmeldenummer: 08002331.0
(22) Anmeldetag: 08.02.2008
(51) Int. Cl.: F16B 1/00

(54) **Verbindungsvorrichtung**

(71) Anmelder: Hestex Systems B.V., 7332 BE Apeldoorn (NL)
(72) Erfinder: Offenbroich, Adrian, 40217 Düsseldorf (DE)
(74) Vertreter: Stenger, Watzke & Ring

(57) **Zusammenfassung**

Die vorliegende Erfindung betrifft eine Verbindungsvorrichtung (10) zur lösbaren Verbindung mit einem Bauelement (12), wobei die Verbindungsvorrichtung (10) zum lösbaren Festlegen am Bauelement (12) eine mittels eines Antriebs (14) zwischen einem verriegelnden und einem nicht verriegelnden Zustand bewegbare Ankereinheit (16) aufweist. Darüber hinaus betrifft die Erfindung ein Verfahren zum Betrieb der Vorrichtung (10). Es wird mit der vorliegenden Erfindung vorgeschlagen, dass die Verbindungsvorrichtung (10) eine Anzeigeeinheit (18) aufweist, mit der wenigstens der verriegelnde und/oder der nicht verriegelnde Zustand anzeigbar ist.

## Beschreibung

Die vorliegende Erfindung betrifft eine Verbindungsvorrichtung zur lösbaren Verbindung mit einem Bauelement, wobei die Verbindungsvorrichtung zum lösbaren Festlegen am Bauelement eine mittels eines Antriebs zwischen einem verriegelnden und einem nicht verriegelnden Zustand bewegbare Ankereinheit aufweist. Darüber hinaus betrifft die Erfindung ein Verfahren zum Betrieb der Vorrichtung.

Gattungsgemäße Vorrichtungen finden im Stand der Technik beispielsweise als Klemmverbindersysteme und dergleichen Anwendung, wenn insbesondere bei Regalsystemen, Messeaufbauten oder dergleichen Verbindungen zwischen Rahmenteilen wie Pfosten und Regalbrettern Bindungsstrukturen aufgebaut werden müssen. Hierbei werden die einzelnen Elemente wie Pfosten, Streben und dergleichen mit Hilfe gattungsgemäßer Vorrichtungen in einer Schnellverbindetechnik zusammengefügt, so dass ein schneller Auf- sowie Abbau des Regalsystems, der Messeaufbauten oder dergleichen erreicht werden kann. Eine schnelle und einfache Handhabung der Verbindungsvorrichtung ist deshalb wünschenswert.

Eine gattungsgemäße Vorrichtung wird beispielsweise durch die EP 1 234 985 B1 offenbart, dort Klemmverbindersystem genannt, wobei eine Ankereinheit der Verbindungsvorrichtung klauenförmig ausgebildete bewegbare Ankerelemente aufweist, die mit Streben eines Gegenelements verbindbar sind. Der Antrieb für die Ankerelemente besteht aus einem Getriebe, welches eine Drehbewegung eines Betätigungselementes in eine translatorische Bewegung der Ankerelemente umsetzt. Das Betätigungselement selbst ragt aus der Vorrichtung heraus und ist durch einen drehbar gelagerten Bolzen gebildet, der an seiner herausragenden Stirnseite eine Kontur aufweist, die es erlaubt, ein Werkzeug wie einen Schraubenzieher, einen Sechskantschlüssel oder dergleichen formschlüssig anzusetzen, um eine Drehbewegung ausführen zu können.

Die gattungsgemäßen Vorrichtungen sind zwar hinsichtlich ihrer Verbindungsfunktion in der Praxis bewährt, jedoch zeigt es sich als nachteilig, dass bei der Montage beziehungsweise Demontage der aktuelle Verbindungszustand nicht erkannt werden kann. So erfolgen in der Praxis häufig Mehrfachbetätigungen, die einen unnötigen Zeitaufwand erfordern. Darüber hinaus wäre es aus Sicherheitsgründen wünschenswert, zu wissen, ob die Verbindungsvorrichtung sicher festgelegt ist.

Hieraus ergibt sich die **Aufgabe** der vorliegenden Erfindung, eine gattungsgemäße Vorrichtung dahingehend weiterzubilden, dass die vorgenannten Nachteile reduziert werden können.

Als **Lösung** wird mit der vorliegenden Erfindung vorgeschlagen, dass die Verbindungsvorrichtung eine Anzeigeeinheit aufweist, mit der wenigstens der verriegelnde und/oder der nicht verriegelnde Zustand anzeigbar ist.

Erstmals wird mit der Erfindung somit die Möglichkeit geschaffen, direkt festzustellen, welchen Zustand die Verbindungsvorrichtung eingenommen hat. Es ist also nicht mehr nötig, das Werkzeug anzusetzen, um festzustellen, in welche Richtung sich die Ankereinheit betätigen lässt, um zu überprüfen, welcher Zustand der Verbindungsvorrichtung vorliegt.

Im verriegelnden Zustand ist nämlich die Verbindungsvorrichtung fest mit dem Bauelement verbunden, so dass ein belastbarer, feststehender Aufbau erreicht werden kann. Im nicht verriegelnden Zustand ist dagegen die Verbindungsvorrichtung in einem Zustand, in dem sie gegenüber dem Bauelement ausgerichtet oder von diesem entfernt werden kann. Zwischen diesen Zuständen ist die Ankereinheit mittels des Antriebs bewegbar. Der Antrieb selbst kann manuell oder auch automatisch ausgebildet sein. Ebenso kann die Anzeigeeinheit mechanischer Natur und/oder elektronischer oder ähnlicher Natur sein. So kann die Anzeigeeinheit beispielsweise durch einen Hebel gebildet sein, der vorgebbare, den Zuständen zuordbare Stellungen einnehmen kann. Diese Zustände können beispielsweise auf der Verbindungsvorrichtung entsprechend mit Markierungen versehen sein, so dass eine einfache Sichtprüfung ausreicht, um den Zustand feststellen zu können. Natürlich können hier nicht nur die beiden vorgenannten Zustände angezeigt werden, sondern es können darüber hinaus auch Störungen, Zwischenzustände oder dergleichen angezeigt werden. Auf diese Weise kann die Sicherheit verbessert werden. Natürlich kann neben oder zusätzlich zu einer mechanischen Anzeigeeinheit auch eine elektronische Anzeigeeinheit vorgesehen sein. Diese kann beispielsweise optische, akustische oder andere Mittel aufweisen, die den Zustand anzeigen können. Die Anzeigeeinheit kann als separates Bauelement der Verbindungsvorrichtung vorgesehen sein, sie kann darüber hinaus aber auch einstückig mit dieser ausgebildet sein. In der einfachsten Ausgestaltung kann die Anzeigeeinheit durch ein Anzeigemittel wie einer Vibrationseinheit, einem akustischen Signalgeber oder einem optischen Signalgeber gebildet sein. Es kann vorgesehen sein, dass die Anzeigeeinheit den Zustand permanent oder auch nur auf Anforderung anzeigt. Gerade bei elektronischen Anzeigeeinheiten ist es vorteilhaft, wenn der Anzeigezustand nur auf Anforderung angezeigt wird, weil auf diese Weise Energie eingespart werden kann.

Gemäß einer Weiterbildung wird vorgeschlagen, dass der Antrieb ein Betätigungselement aufweist, welches einstückig mit der Anzeigeeinheit ausgebildet ist. Hierdurch kann auf einfache Weise eine mechanische Anzeigeeinheit erreicht werden, wodurch zusätzliche Anzeigemittel eingespart werden können. Kosten können eingespart werden. Daneben kann jedoch vorgesehen sein, dass die Anzeigeeinheit elektronisch ausgebildet ist, und entweder einstückig mit dem Betätigungselement oder auch in die Verbindungsvorrichtung integriert angeordnet ist. Dies erlaubt eine robuste Konstruktion, wobei die Anzeigeeinheit vorzugsweise so angeordnet ist, dass sie vor äußeren Einwirkungen geschützt werden kann.

Nach einem weiteren Vorschlag der Erfindung weist der Antrieb einen Motor auf. Dies erlaubt es, die Montage weiter zu vereinfachen, weil der Kraftaufwand für ein Herstellen der Verbindung mit dem Bauelement reduziert werden kann. Darüber hinaus kann das sichere Erreichen der vorgenannten Zustände verbessert werden, da gerade bei eiliger Montage bekanntermaßen die entsprechenden Betätigungsbewegungen vom Personal nur unvollständig ausgeführt werden und somit die Gefahr reduziert werden kann, dass die Verbindungsvorrichtung nicht sicher und ordentlich am Bauelement festgelegt ist.

Darüber hinaus wird vorgeschlagen, dass die Verbindungsvorrichtung eine Steuereinheit aufweist. Mit der Steuereinheit kann der Antrieb gesteuert werden, und zwar derart, dass er beispielsweise nur die beiden vorgegebenen Zustände einnehmen kann. Die Sicherheit der Montage kann weiter verbessert werden.

Nach einer weiteren erfindungsgemäßen Ausgestaltung weist die Verbindungsvorrichtung einen Energiespeicher auf. Der Energiespeicher kann beispielsweise in einer Batterie, einem Akkumulator, einem Kondensator oder dergleichen bestehen. Auch ein mechanischer Energiespeicher in Form einer Feder, einer elastischen Membran oder dergleichen kann vorgesehen sein. Natürlich kann auch eine Kombination dieser Elemente vorgesehen sein, um entsprechende Energieanforderungen bereitstellen zu können. Vorzugsweise dient der Energiespeicher zur Versorgung der Anzeigeeinheit, des Antriebs und der Steuereinheit mit Energie. Die Energie kann beispielsweise elektrische Energie sein, Druckluft, Hydraulikdruck oder dergleichen.

Es wird ferner vorgeschlagen, dass die Anzeigeeinheit Leuchtmittel aufweist. Die Leuchtmittel erlauben es auf besonders einfache Weise, den Zustand der Verbindungsvorrichtung visuell festzustellen. Insbesondere bei selbstleuchtenden Leuchtmitteln wie Glühlampen, Leuchtdioden, Glimmlampen oder dergleichen kann eine gut sichtbare Anzeigeeinheit auch bei ungünstigen Lichtverhältnissen erreicht werden. Dies ist insbesondere für Messeaufbauten oder dergleichen von Vorteil, bei denen nicht in allen Positionen eine gute Ausleuchtung des Arbeitsbereiches erreicht werden kann.

Gemäß einem weiteren vorteilhaften Vorschlag weist die Verbindungsvorrichtung drahtlose Kommunikationsmittel auf. Es kann somit erreicht werden, dass der Zustand auch an eine entfernte Stelle, beispielsweise eine Zentrale oder dergleichen übermittelt werden kann. Darüber hinaus besteht die Möglichkeit, über die drahtlosen Kommunikationsmittel die Verbindungsvorrichtung zu steuern, so dass manuelle Eingriffe unter gleichzeitiger Gewährleistung einer Positionierung reduziert werden können. Dies ist insbesondere bei größeren Aufbauten von Vorteil, bei denen in größerer Höhe Montagearbeiten vorzunehmen sind. Werden die drahtlosen Kommunikationsmittel zur Zustandsabfrage eingesetzt, besteht hierüber die Möglichkeit, auch schwer zugängliche Verbindungsvorrichtungen hinsichtlich ihres Zustands abzufragen. Eine weitere Verbesserung der Sicherheit kann erreicht werden.

Nach einem weiteren Vorschlag der Erfindung weist die Verbindungsvorrichtung eine Fernsteuerung auf. Mit der Fernsteuerung kann die Verbindungsvorrichtung hinsichtlich ihrer Zustände ferngesteuert werden. Die Fernsteuerung kann beispielsweise in einer Zentrale oder dergleichen angeordnet sein. Sie kann aber auch vor Ort direkt an der Baustelle in einem Pult oder dergleichen vorgesehen sein. Gemäß einem weiteren vorteilhaften Vorschlag ist die Fernsteuerung tragbar ausgebildet. Sie kann beispielsweise in Form einer handlichen Fernsteuerung ausgebildet sein oder, insbesondere unverlierbar, am Montagepersonal festgelegt sein. So kann die Fernsteuerung beispielsweise in Form eines Armbands ausgebildet sein, das der entsprechende Monteur am Arm mit sich führt. Die Zuverlässigkeit und Mobilität kann weiter verbessert werden, insbesondere auch weil die Fernsteuerung auf diese Weise beim entsprechenden Monteur nicht nur ständig verfügbar ist, sondern auch nicht abgelegt werden muss, und deshalb vor Beschädigungen durch Baustellenarbeiten geschützt ist.

Vorzugsweise weist die Fernsteuerung eine Aktivierungstaste auf, mit der die Verbindungsvorrichtung aktiviert werden kann. So kann beispielsweise vorgesehen sein, dass durch die Betätigung der Aktivierungstaste die Verbindungsvorrichtung ihren Zustand wechselt. Natürlich kann auch für das Erreichen jedes Zustands eine eigene Aktivierungstaste vorgesehen sein. Die Aktivierungstaste kann beispielsweise in Form eines elektromechanischen Tasters, eines optischen oder kapazitiven Sensors oder dergleichen ausgebildet sein.

In einer vorteilhaften Weiterbildung wird vorgeschlagen, dass die Fernsteuerung Empfangsmittel sowie eine Anzeigeeinheit aufweist. Dies erlaubt es, mit der Verbindungsvorrichtung in Kommunikationsverbindung zu treten und den Zustand der Verbindungsvorrichtung abzufragen. Mit der Anzeigeeinheit kann der Zustand angezeigt werden. Die Anzeigeeinheit kann im wesentlichen wie die Anzeigeeinheit der Verbindungsvorrichtung ausgebildet sein. Vorzugsweise ist diese jedoch elektronisch ausgebildet. Die Empfangsmittel sind insbesondere dafür ausgelegt, drahtlos mit der Verbindungsvorrichtung in Kommunikationsverbindung zu treten. Die Kommunikationsverbindung kann beispielsweise auf Funkbasis, Infrarot, Magnetfeld oder dergleichen gebildet sein. Eine einfache Bedienbarkeit kann erreicht werden.

Gemäß einer weiteren Ausgestaltung wird vorgeschlagen, dass die Verbindungsvorrichtung einen Sensor aufweist. Der Sensor ist vorzugsweise dafür vorgesehen, den Zustand der Verbindungsvorrichtung zu detektieren. Auf diese Weise kann beispielsweise die Energieversorgung des Antriebs bei Erreichen des gewünschten Zustands durch die Ankereinheit abgeschaltet werden, um Energie zu sparen. Natürlich kann der Sensor auch dazu verwendet werden, das Erreichen des gewünschten Zustands zu melden. Die Meldung kann beispielsweise an die Steuerung oder auch an eine entfernte Stelle wie die Fernsteuerung, eine Zentrale oder dergleichen erfolgen. Die Zuverlässigkeit kann weiter verbessert werden. Der Sensor kann beispielsweise auf induktiver Basis, kapazitiver Basis, durch einen Reed-Kontakt, durch eine Lichtschranke oder dergleichen gebildet sein.

Mit der Erfindung wird ferner ein Verfahren zum Betrieb einer erfindungsgemäßen Vorrichtung vorgeschlagen, wobei mittels eines Antriebs eine bewegbare Ankereinheit zwischen einem verriegelnden und einem nicht verriegelnden Zustand bewegt wird, der Zustand erfasst und mittels einer Anzeigeeinheit angezeigt wird. Eine automatische Zustandserfassung und Anzeige des Zustands kann erreicht werden.

In einer Ausgestaltung wird vorgeschlagen, dass der Zustand kontinuierlich über den Bewegungsbereich der Ankereinheit erfasst wird. Auf diese Weise kann die Bewegung der Ankereinheit nachvollzogen werden, was insbesondere dann von Vorteil ist, wenn die Ankereinheit nicht den gewünschten Zustand erreicht und in einem Zwischenzustand hängenbleibt. Dieser Zustand kann beispielsweise als Störungszustand gemeldet werden. Die Sicherheit kann weiter verbessert werden.

Nach einem Vorschlag der Erfindung wird vorgeschlagen, dass der Zustand optisch, akustisch und/oder taktil angezeigt wird. Vorgesehen sein kann die Anzeige des Zustands mittels bekannter, vorgenannter Leuchtmittel sowie auch mittels eines Summers, oder eines Vibrators, der es erlaubt, durch Vibration das Erreichen des Zustands taktil zu erfassen. Natürlich können diese Möglichkeiten auch miteinander kombiniert sein, um einen möglichst weiten Anwendungsbereich zu erreichen.

Gemäß einer Weiterbildung wird vorgeschlagen, dass ein elektrischer, pneumatischer und/oder hydraulischer Antrieb verwendet wird. Hierdurch kann der manuelle Antrieb entlastet oder gegebenenfalls auch ersetzt werden, wodurch die Bedienbarkeit der Vorrichtung erleichtert wird. Darüber hinaus kann erreicht werden, dass auch größere Vorrichtungen sowie schwer bedienbare Ankereinheiten mit einem entsprechenden Antrieb versehen werden, damit diese sicher in den gewünschten Zustand verfahren werden können.

Vorzugsweise wird der Antrieb drahtlos mit Energie versorgt. Dies hat den Vorteil, dass ein separater Energiespeicher eingespart oder zumindest jedoch reduziert werden kann. Die Energie kann beispielsweise von der Fernbedienung, der Zentrale oder dergleichen zur Verfügung gestellt werden, wobei die drahtlose Energieversorgung über ein Induktionsfeld oder dergleichen erfolgt. In der Vorrichtung sind dazu geeignete Empfangs- und Umwandlungsmittel vorhanden, die Energie in eine Energie für den Antrieb umwandeln können.

Gemäß einem weiteren Vorschlag wird der Antrieb ferngesteuert. Dies erlaubt es, den Antrieb aus sicherer Position zu steuern, was insbesondere bei großen aufwendigen Aufbauten vorteilhaft ist, bei denen mehrere Monteure zusammenarbeiten müssen.

Darüber hinaus kann vorgesehen sein, dass die Antriebe mehrerer Vorrichtungen zugleich ferngesteuert werden. Dies ist insbesondere dann von Vorteil, wenn mehrere Verbindungsvorrichtungen derart miteinander in Wirkverbindung gebracht werden müssen, dass sie zugleich mit dem Bauelement oder an mehreren Bauelementen angreifen. Auch komplizierte Montagekonstruktionen lassen sich auf diese Weise einfach und übersichtlich durch die Monteure bewältigen.

Gemäß einer Weiterbildung wird vorgeschlagen, dass die zugleich fernsteuerbaren Antriebe ausgewählt werden. So kann vorgesehen sein, dass die Antriebe über eine Identifikation verfügen, mit der jeder Antrieb einzeln ansteuerbar ist. Das hat den Vorteil, dass eine Fernbedienung zur Steuerung mehrerer Antriebe unabhängig voneinander verwendet werden kann. Natürlich kann vorgesehen sein, dass Gruppen von Antrieben eine gemeinsame Identifikation aufweisen oder dass die Fernsteuerung bestimmte ausgewählte Antriebe anhand ihrer Identifikation ansteuert. Die Bedienbarkeit der Vorrichtung kann weiter verbessert werden.

Es wird ferner vorgeschlagen, dass ein Zustand an eine Zentrale gemeldet wird. Auf diese Weise kann ein Montagefortschritt beim Auf- beziehungsweise Abbau überwacht werden.

Gemäß einer weiteren Ausgestaltung wird vorgeschlagen, dass mehrere Antriebe in Kommunikationsverbindung untereinander stehen. So kann beispielsweise vorgesehen sein, dass ausgewählte Antriebe nur gemeinsam angesteuert werden können, indem beispielsweise ein einziger der Antriebe angesteuert wird. Dieser übermittelt sein Ansteuersignal an die mit ihm in Kommunikationsverbindung stehenden weiteren Antriebe, die daraufhin ebenfalls aktiviert werden. Die Kommunikationsverbindung kann beispielsweise drahtgebunden über eine Schnittstelle wie IEEE, RS 232 oder dergleichen oder auch drahtlos über Funk, Infrarot oder dergleichen erfolgen. Die Bedienbarkeit kann weiter verbessert werden.

Weitere Vorteile und Merkmale sind der folgenden Beschreibung zweier Ausführungsbeispiele zu entnehmen. Die Zeichnungen sind Schemazeichnungen und dienen nur der Erläuterung der folgenden Ausführungsbeispiele.

### Es zeigen:

- Fig. 1: schematisch eine erfindungsgemäße Vorrichtung zur Einführung in eine Öffnung eines Pfostens,

- Fig. 2: die erfindungsgemäße Vorrichtung in Fig. 1 mit schematisch dargestellten Funktionsbaugruppen,
- Fig. 3: schematisch eine Fernbedienung für die erfindungsgemäße Vorrichtung,
- Fig. 4: eine Schnittansicht einer mechanischen Anzeigeeinheit in Verbindung mit der Erfindung,
- Fig. 5: einen Rückstellmechanismus für die Anzeigeeinheit gemäß Fig. 4 und
- Fig. 6: eine vergrößerte Ausschnittsdarstellung der Anzeigeeinheit gemäß Fig. 4.

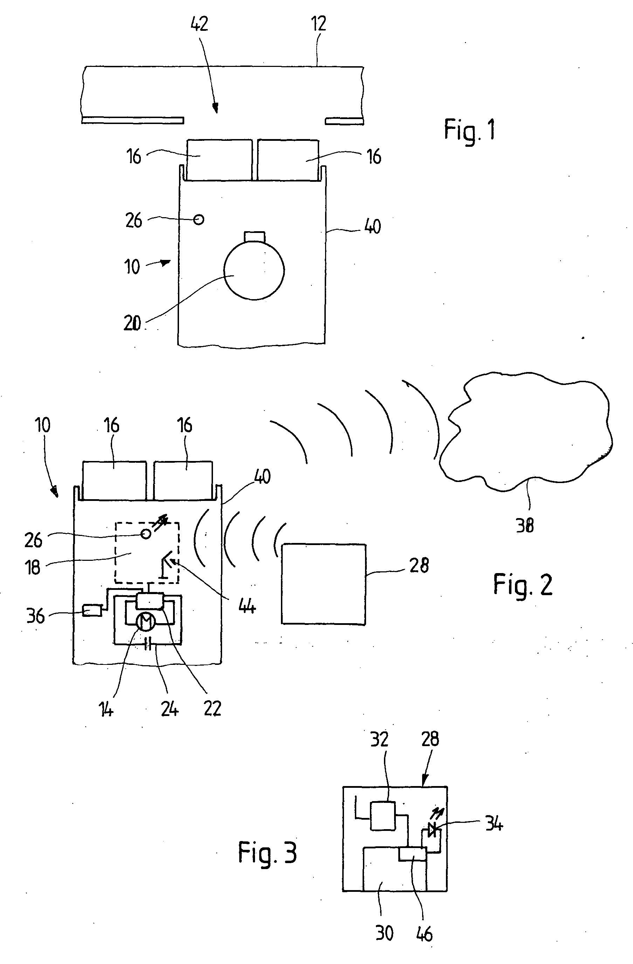

Fig. 1 zeigt einen erfindungsgemäßen Klemmverbinder 10, der zur lösbaren Verbindung mit einem Pfosten 12 vorgesehen ist. Der Pfosten 12 weist hierzu eine Öffnung 42 auf, in die eine Ankereinheit mit Riegelklauen 16 eingeführt werden kann und dort festlegbar ist. Im festgelegten Zustand befindet sich der Klemmverbinder 10 im verriegelnden Zustand. Im entriegelnden Zustand kann der Klemmverbinder 10 dagegen von dem Pfosten 12 entfernt beziehungsweise ausgerichtet werden. Zum Festlegen des Klemmverbinders 10 am Pfosten 12 werden die Riegelklauen 16 mittels eines nicht näher dargestellten Antriebs, der manuell über ein Betätigungselement 20 antreibbar ist, derart verfahren, dass die Riegelklauen 16 einen Rand der Öffnung 42 hintergreifen und auf diese Weise den Klemmverbinder 10 am Pfosten 12 festlegen. Das Betätigungselement 20 weist hierzu eine Torx-Ausnehmung auf, in die ein entsprechender Schlüssel einsetzbar ist, damit das Betätigungselement 20 manuell betätigt werden kann. Wie aus Fig. 1 ferner zu entnehmen ist, ist der Klemmverbinder 10 in einem Gehäuse 40 angeordnet, in dem das Betätigungselement 20 drehbar gelagert ist. Eine Drehbewegung des Betätigungselementes 20 wird in eine entsprechende Bewegung der Riegelklauen 16 mittels des Antriebs umgesetzt. Darüber hinaus ist der Fig. 1 zu entnehmen, dass eine Leuchtdiode 26 vorgesehen ist. Mit der Leuchtdiode 26 kann der Zustand des Klemmverbinders 10 visuell abgelesen werden. In der vorliegenden Ausgestaltung ist vorgesehen, dass der verriegelnde Zustand durch ein grünes Leuchten angezeigt wird, wohingegen der nicht verriegelnde Zustand durch ein rotes Leuchten der Leuchtdiode 26 angezeigt wird. Tritt eine Störung auf, leuchtet die Leuchtdiode 26 gelb.

Fig. 2 zeigt schematisch den Klemmverbinder 10 gemäß der Fig. 1, wobei jedoch hier elektronische Schaltgruppen im Gehäuse 40 des Klemmverbinders 10 dargestellt sind. Fig. 2 zeigt eine Anzeigeeinheit 18, die die Leuchtdiode 26 aufweist und diese entsprechend ansteuert. Fig. 2 ist ferner zu entnehmen, dass die Anzeigeeinheit 18 mit einer Steuereinheit 22 in Verbindung steht. An der Steuereinheit 22 ist ferner ein Antriebsmotor 14 angeschlossen, mit dem die Riegelklauen 16 in vorbestimmter Weise angetrieben werden können. Darüber hinaus ist die Steuereinheit 22 mit einem Kondensator 24 verbunden, der sämtliche elektronischen Baugruppen 14, 18, 22, 26, 44 mit Energie versorgt. Zur Detektierung des Zustands der Riegelklauen 16 und damit des Klemmverbinders 10 ist ein Sensor 36 vorgesehen, der vorliegend auf optischer Basis arbeitet. Dieser detektiert die Zustände der Riegelklauen 16. Ferner ist die Steuerung mit einer Sende-Empfangseinheit 44 verbunden, mit der eine Nahfunkverbindung zu einer Fernsteuerung 28 (Fig. 3) herstellbar ist sowie mit der der Zustand über eine weitere Funkverbindung an eine Zentrale 38 übermittelt werden kann.

In Fig. 3 ist die Fernsteuerung 28 dargestellt, mit der der Klemmverbinder 10 ferngesteuert werden kann. Die Fernsteuerung 28 weist hierzu eine Sende-Empfangseinheit 32 auf, die mit einer Taste 30 in elektrischer Verbindung steht. Vorliegend ist die Taste 30 als elektromechanische Drucktaste ausgebildet. Durch Betätigen der Taste 30 wird die Sende-Empfangseinheit 32 aktiviert, ein Signal über Nahfunk an den Klemmverbinder 10, und zwar dessen Sende-Empfangseinheit 44 zu senden. Das Signal ist vorliegend digital kodiert. Die Funkübertragung erfolgt mittels FSK (Frequenzumtastung) in einem Frequenzbereich von etwa 27 MHz. Die Sende-Empfangseinheit 44 des Klemmverbinders 10 detektiert das Signal und liefert einen entsprechenden Befehl an die Steuereinheit 22. Diese registriert den Befehl und veranlasst ein Wechseln des Zustands der Riegelklauen 16. Hierzu wird der Motor 14 entsprechend angesteuert, so dass die Riegelklauen 16 in den nicht eingenommenen Zustand überführt werden. Die Energie hierzu erhält der Klemmverbinder 10 über die Nahfunkverbindung von der Fernsteuerung 30. Die Fernsteuerung 30 weist hierzu eine nicht näher dargestellte Batterie auf. Ebenfalls nicht näher dargestellte Umwandlungsmittel setzen die Empfangsenergie der Sende-Empfangseinheit 44 in eine elektrische Energie um und speichern diese für die spätere Verwendung im Kondensator 24.

Mit dem Sensor 36 wird kontinuierlich der aktuelle Zustand der Riegelklauen 16 überwacht. So kann mit dem Sensor 36 nicht nur das Erreichen der jeweiligen Zustände, und zwar des verriegelnden und des nicht verriegelnden Zustands, ermittelt werden, sondern es kann darüber hinaus auch ein Zwischenzustand beobachtet werden, so dass gegebenenfalls entsprechende Meldungen an die Steuerung 22 erfolgen können. Wird nach einer vorgegebenen Zeitdauer von im vorliegenden Fall etwa 0,5 sec der gewünschte Zustand nicht erreicht, so erfolgt von der Steuerung 22 eine Störungsmeldung über die Anzeigeeinheit 18 und deren Leuchtdiode 26, indem diese gelb leuchtet. Wird dagegen der gewünschte Zustand erreicht, so wird dies durch die entsprechende Farbe durch die Leuchtdiode 26 angezeigt. Sobald die Kommunikationsverbindung zwischen der Fernsteuerung 28 und dem Klemmverbinder 10 unterbrochen ist, wird die Anzeigeeinheit 18 deaktiviert, um Energie zu sparen.

Während des Empfangs des Signals von der Fernsteuerung 28 wird zugleich ein weiteres Funksignal von der Sende-Empfangseinheit 44 ausgesendet, welches den Zustand aktuell anzeigt und von einer Zentrale 38 empfangen wird. In der Zentrale 38 wird das Signal entsprechend gespeichert und für eine spätere Auswertung bereitgehalten. Auf diese Weise kann der Arbeitsfortschritt auf der Montage nachgehalten werden. Treten darüber hinaus Störungsmeldungen auf, so kann seitens der Zentrale 38 eine zusätzliche Sicherheit dahingehend erreicht werden, dass die Zentrale 38 eine Überprüfung des Klemmverbinders 10 anordnet. Hierzu weist jede Sende-Empfangseinheit 44 eine Identifikation auf, die jeweils an die Gegenstelle 38, 28 übermittelt wird. Hierdurch lässt sich auch in komplexen Aufbauten der jeweilige Klemmverbinder 10 identifizieren. Einzelne und/oder alle elektronischen Baugruppen können in Halbleiter-Chips integriert sein, die an geeigneter Stelle der Klemmvorrichtung 10 angeordnet sind. Ein solcher Chip ist vorliegend als Transponder-Chip ausgebildet, in welchem die Identifikation abfragbar gespeichert ist. Vorliegend ist ferner vorgesehen, dass von der Fernbedienung ein Signal gesendet wird, welches die Identifikation der Klemmvorrichtung 10 umfasst, so dass diese prüfen kann, ob das Signal für sie bestimmt ist. Erst nach positivem Prüfungsergebnis wird die Signalinformation an die Steuerung 22 weitergeleitet. Damit der Monteur weiß, welche Identifikation gesendet werden muss, um die Klemmvorrichtung 10 zu aktivieren, ist diese vorliegend auf deren Gehäuse 40 eingeprägt.

Das an die Zentrale 38 ausgesendete Signal kann auch von der Fernbedienung 28 über deren Sende-Empfangseinheit 32 empfangen werden. Es wird dort ausgewertet und mittels einer Steuereinheit 46 wird eine entsprechende Leuchtdiode 34 angesteuert, die im wesentlichen den Funktionen der Leuchtdiode 26 entspricht. Auf diese Weise erfolgt eine zusätzliche Meldung an die Fernsteuerung 28, so dass der Zustand des Klemmverbinders 10 nicht nur an diesem selbst, sondern auch an der Fernsteuerung 28 überprüft werden kann.

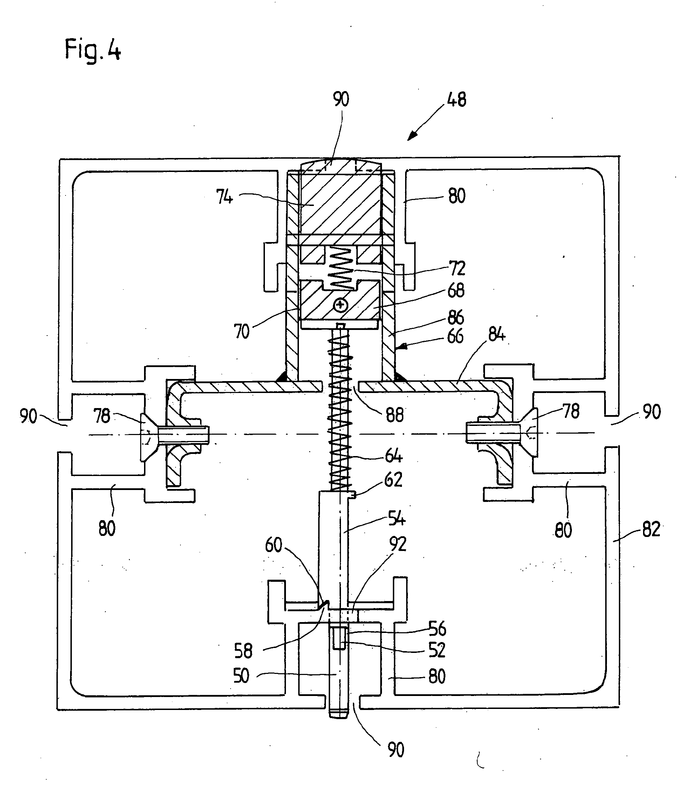

Fig. 4 zeigt einen Schnitt durch einen nicht näher bezeichneten Klemmverbinder im Bereich einer mechanischen Anzeigeeinheit 48 gemäß einer weiteren Ausgestaltung der Erfindung. Ein Profil 82 des Klemmverbinders ist mit nach innen ragenden Profilansätzen 80 versehen, an denen die Anzeigeeinheit 48 angeordnet ist. Eine Halterung 66 ist mittels eines Haltebügels 84 an zwei gegenüberliegenden Profilansätzen 80 mittels Schraubbefestigungen 78 befestigt. Mittig ist am Haltebügel 84 eine Hülse 86 nach oben ragend angeschweißt, die in einem Profilansatz 80 quer zu den beiden gegenüberliegenden Profilansätzen 80 eingreift. Die Hülse 86 ragt bis zum inneren Rand des äußeren Profilschenkels des Profils 82.

Die Profilansätze 80 weisen nach außen Öffnungen 90 auf. Durch diese können die Schraubbefestigungen 78 betätigt werden. Ebenfalls dient die Profilöffnung 90 im oberen Bereich in Fig. 4 des Profils 82 dazu, visuell die Position eines Anzeigeelements 74 erkennen zu können. Dieses ist axial beweglich in der Hülse 86 gelagert und ragt je nach anzuzeigendem Zustand in den Bereich der Öffnung 90 oder ist von ihr entfernt.

Axial benachbart zum Anzeigeelement 74 ist ein Kolben 68 axialverschieblich in einem durch die Hülse 86 gebildeten Zylinder 70 gelagert. Zwischen den gegenüberliegenden Stirnseiten des Anzeigeelements 74 und des Kolbens 68 ist konzentrisch zu einer nicht näher bezeichneten Achse der Hülse 86 eine Spiralfeder 72 angeordnet, die sich sowohl am Anzeigeelement 74 als auch am Kolben 68 abstützt. Die Spiralfeder 72 ist ferner an beiden Elementen 68, 74 festgelegt, so dass eine Abwärtsbewegung des Kolbens 68 ebenfalls zu einer Abwärtsbewegung des Anzeigeelements 74 führt. Durch die Feder 72 wird erreicht, dass Toleranzen oder Ungenauigkeiten bei der Bewegung gegenüber dem Anzeigeelement 74 ausgeglichen werden. Auf diese Weise ist gewährleistet, dass das Anzeigeelement 74 in seiner maximal herausgefahrenen Stellung am äußeren Rand des Profils 82 zur Anlage kommt. Die Stellung des Kolbens 68 ist abhängig vom jeweiligen Verriegelungszustand des Klemmverbinders 10.

Auf der dem Anzeigeelement 74 gegenüberliegenden Seite des Kolbens 68 ist ebenfalls konzentrisch zur Längsachse der Hülse 86 eine Antriebsstange 54 vorgesehen, die in einer nicht näher bezeichneten Bohrung des Kolbens 68 axial beweglich und begrenzt schwenkbar geführt ist. Die Antriebsstange 54 ragt durch eine Bohrung 88 des Haltebügels 84 bis in den Bereich des der Hülse 86 gegenüberliegenden Profilansatzes 80. In einem mittleren Bereich weist die Antriebsstange 54 einen Absatz 62 auf, an dem sich eine die Antriebsstange 54 umgebende Spiralfeder 64 abstützt. An der gegenüberliegenden Seite ist die Spiralfeder 64 am Kolben 68 abgestützt. Hierdurch wird erreicht, dass die Antriebsstange 54 in Richtung vom Kolben 68 weg vorgespannt ist.

Im Bereich des unteren Profilansatzes 80 ist die Antriebsstange 54 mit einer Verbreiterung versehen, die eine Rastnut 60 aufweist, die in axialer Richtung ausgebildet ist. Wie aus Fig. 4 zu entnehmen ist, kann die Rastnut 60 mit einer Rastnase 58 des Profilansatzes 80 in Wirkverbindung gebracht werden. Der Profilansatz 80 weist eine Öffnung 92 auf, durch die die Antriebsstange 54 durchragt. In dem in Fig. 4 dargestellten Zustand ist die Antriebsstange 54 mit ihrer Rastnut 60 an der Rastnase 58 verrastet. Durch die Vorspannung der Feder 64 wird dieser Zustand eingerastet gehalten.

Der untere Abschnitt der Antriebsstange 54 weist einen Zapfen 52 auf, auf den ein Betätigungsstift 50, der eine Sackbohrung 56 aufweist, aufgesteckt werden kann. Der Betätigungsstift 50 ragt im aufgesteckten Zustand durch die untere Öffnung 90 des Profils 82. Hierdurch ist das Anzeigeelement manuell betätigbar, indem nämlich der Betätigungsstift 50 mit einem Finger leicht betätigt wird, durch geringfügiges Verschwenken die Rastnutverbindung außer Eingriff gebracht wird und die Antriebsstange 54 durch die Öffnung 92 sich nach außen bewegt. Hierdurch wird zugleich eine Abwärtsbewegung des Kolbens 68 und damit auch eine Abwärtsbewegung des Anzeigeelements 74 bewirkt, wodurch angezeigt wird, dass der Klemmverbinder 10 nunmehr in einen entriegelnden Zustand gebracht werden kann. Der Betätigungsstift 50 ist abnehmbar ausgestaltet, um Beschädigungen während der Lagerung zu vermeiden.

Der Klemmverbinder 10 kann nunmehr in den entriegelnden Zustand überführt und vom Pfosten entfernt werden.

Im umgekehrten Fall ist zunächst der Klemmverbinder 10 am Pfosten vorschriftsmäßig festzulegen. Der aus der unteren Öffnung 90 herausragende Betätigungsstift 50 kann in diesem Fall manuell in die Öffnung 90 hineingedrückt werden, und zwar soweit, bis die Rastnut 60 die Öffnung 92 passiert hat und mit der Rastnase 58 in Eingriff bringbar ist. Durch leichtes seitliches Verschwenken wird die Rastverbindung hergestellt. Zugleich wird durch diese Betätigung der Kolben 68 axial in Richtung Anzeigeelement 74 verschoben, welches aufgrund der Feder 72 in die Öffnung 90 auf der gegenüberliegenden Seite bewegt wird. Da der Weg des Kolbens 68 geringfügig größer als der des Anzeigeelements 74 ist, wird das Anzeigeelement 74 aufgrund der Federvorspannung durch die Feder 72 in dieser Position gehalten. Hierdurch wird nun der verriegelnde Zustand angezeigt. Über ein nicht näher bezeichnetes Getriebe ist sichergestellt, dass der Klemmverbinder 10 in dieser Stellung nicht versehentlich in den entriegelnden Zustand überführt werden kann. Dies kann erst dann erfolgen, wenn, wie zuvor beschrieben, mittels des Betätigungsstifts 50 die Anzeigeeinheit in den entsprechenden Zustand überführt wurde. Umgekehrt ist sichergestellt, dass die Betätigung des Betätigungsstifts 50 erst dann möglich ist, wenn der Klemmverbinder 10 in der verriegelten Stellung angekommen ist.

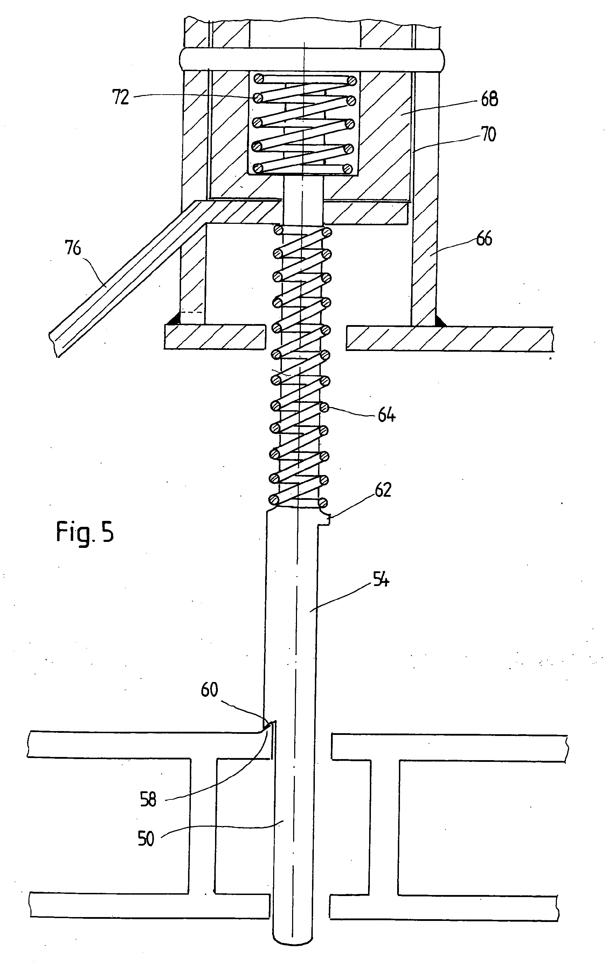

In Fig. 5 ist dargestellt, dass die vorbeschriebene Anordnung mit einem Magnethebel 76 betätigt werden kann. Der Magnethebel 76 kann zu einer automatischen Steuerung gehören, er kann aber auch direkt durch Steuerelemente des Klemmverbinders 10 betätigt werden. Auf diese Weise kann neben der manuellen Betätigung auch eine automatische Betätigung erreicht werden.

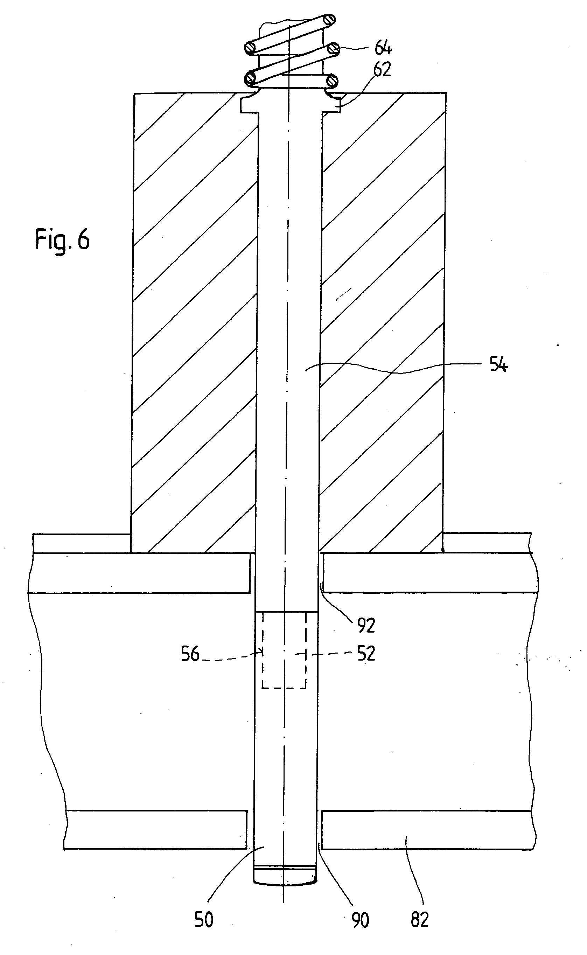

Fig. 6 zeigt eine vergrößerte Darstellung des unteren Bereichs der Steuerung für die Anzeigeeinheit 48 mit dem Betätigungselement 50 und der Antriebsstange 54. Die Anzeige ist hier in einer um 90° gedrehten Version dargestellt, so dass die Rastnase 58 und die Rastnut 60 nicht erkennbar sind.

Die in den Figuren dargestellten Ausführungsbeispiele dienen lediglich der Erläuterung der Erfindung und sind für diese nicht beschränkend. So können beispielsweise an der Fernsteuerung 28 unterschiedliche Tasten für die jeweiligen Zustände vorgesehen sein, oder es kann vorgesehen sein, dass die Fernsteuerung 28 nur eine sehr kurze Nahverbindung zum Klemmverbinder 10 aufbauen kann und permanent im Sendebetrieb ist, so dass eine Aktivierung des Antriebs 14 des Klemmverbinders 10 dadurch erfolgen kann, dass lediglich die Fernsteuerung 28 in eine ausreichende Nähe zum Klemmverbinder 10 gebracht wird. Die Montage kann weiter vereinfacht werden. Auch weitere Ausgestaltungen und Änderungen können vom Fachmann in naheliegender Weise durchgeführt werden, ohne den Geist der Erfindung zu verlassen.

### Bezugszeichenliste

- 10: Klemmverbinder
- 12: Pfosten
- 14: Elektromotor
- 16: Riegelklaue
- 18: Anzeigeeinheit
- 20: Betätigungselement
- 22: Steuereinheit
- 24: Kondensator
- 26: Leuchtdiode
- 28: Fernsteuerung
- 30: Taste
- 32: Sende-Empfangseinheit
- 34: Anzeigeeinheit
- 36: Sensor
- 38: Zentrale
- 40: Gehäuse
- 42: Öffnung
- 44: Sende-Empfangseinheit
- 46: Steuereinheit
- 48: Anzeigeeinheit
- 50: Betätigungsstift

- 52: Zapfen
- 54: Antriebsstange
- 56: Sackbohrung
- 58: Rastnase
- 60: Rastnut
- 62: Absatz
- 64: Spiralfeder
- 66: Halterung
- 68: Kolben
- 70: Zylinder
- 72: Feder
- 74: Anzeigeelement
- 76: Magnethebel
- 78: Schraubbefestigung
- 80: Profilansatz
- 82: Profil
- 84: Haltebügel
- 86: Hülse
- 88: Bohrung
- 90: Profilöffnung
- 92: Öffnung

## Patentansprüche

1. Verbindungsvorrichtung (10) zur lösbaren Verbindung mit einem Bauelement (12), wobei die Verbindungsvorrichtung (10) zum lösbaren Festlegen am Bauelement (12) eine mittels eines Antriebs (14) zwischen einem verriegelnden und einem nicht verriegelnden Zustand bewegbare Ankereinheit (16) aufweist,
**gekennzeichnet durch**
eine Anzeigeeinheit (18), mit der wenigstens der verriegelnde und/oder der nicht verriegelnde Zustand anzeigbar ist.

2. Verbindungsvorrichtung nach Anspruch 1**, dadurch gekennzeichnet, dass** der Antrieb (14) ein Betätigungselement (20) aufweist, welches einstückig mit der Anzeigeeinheit ausgebildet ist.

3. Verbindungsvorrichtung nach Anspruch 1 oder 2, **dadurch gekennzeichnet, dass** der Antrieb (14) einen Motor aufweist.

4. Verbindungsvorrichtung nach einem der Ansprüche 1 bis 3, **gekennzeichnet durch** eine Steuereinheit (22).

5. Verbindungsvorrichtung nach einem der Ansprüche 1 bis 4, **gekennzeichnet durch** einen Energiespeicher (24).

6. Verbindungsvorrichtung nach einem der Ansprüche 1 bis 5, **dadurch gekennzeichnet, dass** die Anzeigeeinheit (18) Leuchtmittel (26) aufweist.

7. Verbindungsvorrichtung nach einem der Ansprüche 1 bis 6, **gekennzeichnet durch** drahtlose Kommunikationsmittel.

8. Verbindungsvorrichtung nach einem der Ansprüche 1 bis 7, **gekennzeichnet durch** eine Fernsteuerung (28).

9. Verbindungsvorrichtung nach einem der Ansprüche 1 bis 8, **dadurch gekennzeichnet, dass** die Fernsteuerung (28) tragbar ausgebildet ist.

10. Verbindungsvorrichtung nach einem der Ansprüche 1 bis 9, **dadurch gekennzeichnet, dass** die Fernsteuerung (28) eine Aktivierungstaste (30) aufweist.

11. Verbindungsvorrichtung nach einem der Ansprüche 1 bis 10, **dadurch gekennzeichnet, dass** die Fernsteuerung (28) Empfangsmittel (32) sowie eine Anzeigeeinheit (34) aufweist.

12. Verbindungsvorrichtung nach einem der Ansprüche 1 bis 11, **gekennzeichnet durch** einen Sensor (36).

13. Verfahren zum Betrieb einer Vorrichtung (10) nach einem der Ansprüche 1 bis 12, wobei mittels eines Antriebs (14) eine bewegbare Ankereinheit (16) zwischen einem verriegelnden und einem nicht verriegelnden Zustand bewegt wird, der Zustand erfasst und mittels einer Anzeigeeinheit (18) angezeigt wird.

14. Verfahren nach Anspruch 13, **dadurch gekennzeichnet, dass** der Zustand kontinuierlich über einen Bewegungsbereich der Ankereinheit (16) erfaßt wird.

15. Verfahren nach Anspruch 13 oder 14, **dadurch gekennzeichnet, dass** der Zustand optisch, akustisch und/oder taktil angezeigt wird.

16. Verfahren nach einem der Ansprüche 13 bis 15, **dadurch gekennzeichnet, dass** ein elektrischer, pneumatischer und/oder hydraulischer Antrieb (14) verwendet wird.

17. Verfahren nach einem der Ansprüche 13 bis 16, **dadurch gekennzeichnet, dass** der Antrieb (14) drahtlos mit Energie versorgt wird.

18. Verfahren nach einem der Ansprüche 13 bis 17, **dadurch gekennzeichnet, dass** der Antrieb (14) ferngesteuert wird.

19. Verfahren nach einem der Ansprüche 13 bis 18, **dadurch gekennzeichnet, dass** die Antriebe (14) mehrerer Vorrichtungen (10) zugleich ferngesteuert werden.

20. Verfahren nach Anspruch 19, **dadurch gekennzeichnet, dass** die zugleich fernsteuerbaren Antriebe (14) ausgewählt werden.

21. Verfahren nach einem der Ansprüche 13 bis 20, **dadurch gekennzeichnet, dass** ein Zustand an eine Zentrale (38) gemeldet wird.

22. Verfahren nach einem der Ansprüche 13 bis 21, **dadurch gekennzeichnet, dass** mehrere Antriebe (14) in Kommunikationsverbindung untereinander stehen.
